# EUROPEAN PATENT APPLICATION

(11) **EP 2 484 491 A1**
(43) Date of publication of application: **08.08.2012**
(21) Application number: 09849820.7
(22) Date of filing: 28.09.2009
(51) Int. Cl.: B24B 49/12, B23F 5/04, B23F 23/00

(54) **METHOD OF PHASING THREADED GRINDING STONE, AS WELL AS GEAR GRINDING MACHINE**

(71) Applicant: Mitsubishi Heavy Industries, Ltd., Tokyo 108-8215 (JP)
(72) Inventor: YANASE Yoshikoto, Ritto-shi Shiga 520-3080 (JP); ISHIZU Kazuyuki, Ritto-shi Shiga 520-3080 (JP)
(74) Representative: Henkel, Breuer & Partner
(86) International application number: PCT/JP2009/066760
(87) International publication number: WO 2011/036789

(57) **Abstract**

Provided is a method of phasing a threaded grinding stone, as well as a gear grinding machine, the aforementioned method and machine being such that the phasing of the threaded grinding stone with respect to a gear to be machined or to a dresser can be performed at high speed. For the purpose of achieving the above, a threaded grinding stone (14) is phased with respect to a workpiece (W) or a disk dresser (32) prior to the engagement of the threaded grinding stone (14) with the workpiece (W) or with the disk dresser (32) during grinding or dressing. In performing this phasing, the phase of the threaded grinding stone (14) is adjusted in such a way that a tooth tip of the workpiece (W) or a blade tip of the disk dresser (32) faces the central position of an edge groove of the threaded grinding stone (14). Subsequently, starting from this rough phasing state, an intermediate phase is obtained by causing an edge surface of the threaded grinding stone (14) to contact an edge surface of the workpiece (W) or an edge surface of the disk dresser (32). Furthermore, the phase of the threaded grinding stone (14) is accurately adjusted so that the tooth tip of the workpiece (W) or the blade tip of the disk dresser (32) is disposed in this intermediate phase.

## Description

### TECHNICAL FIELD

The present invention relates to a method of phasing a threaded grinding wheel, with a gear to be machined which is to be ground by use of the threaded grinding wheel, or with a dresser which is to dress the threaded grinding wheel, as well as relates to a gear grinding machine to which this method is applied.

### BACKGROUND ART

Heretofore, gear grinding machines are provided to efficiently finish the tooth surfaces of a workpiece, which is a heat-treated gear to be machined, by grinding the workpiece with a threaded grinding wheel, which is a grinding tool. In such a gear grinding machine, the workpiece is ground in a state in which the threaded grinding wheel and the workpiece are being rotated in synchronization while meshing with each other. Accordingly, insufficient precision of meshing may cause uneven grinding on the tooth surfaces of the workpiece and may reduce the life of the threaded grinding wheel due to an excessive load thereon.

For the above-described reasons, in a gear grinding machine of this type, phasing is performed ahead of meshing at the time of grinding in order to mesh a threaded grinding wheel with a workpiece with high precision. In the phasing, the threaded grinding wheel and the workpiece are positioned so that the cutting edges (peaks and valleys) of the threaded grinding wheel and the roots (peaks and valleys) of the teeth of the workpiece have an appropriate phase relationship. Such a phasing method for phasing a threaded grinding wheel with a workpiece is disclosed in, for example, Patent Document 1.

### PRIOR ART DOCUMENT

### PATENT DOCUMENT

Patent Document 1: Japanese Patent Application Publication No. 2003-165023

### SUMMARY OF THE INVENTION

### PROBLEMS TO BE SOLVED BY THE INVENTION

In the conventional method described above, firstly the threaded grinding wheel is roughly phased with the workpiece (rough phasing) so that peaks and valleys of the threaded grinding wheel and the workpiece face each other, and then the workpiece is rotated forward and reversely to bring both tooth surfaces of the workpiece into contact with facing thread surfaces of the threaded grinding wheel, respectively, and subsequently the threaded grinding wheel is precisely phased with the workpiece (precise phasing) on the basis of contact position data for each of the tooth surfaces in contact conditions.

However, in such a conventional method, the rough phasing merely avoids interference between a thread tip of the threaded grinding wheel and a tooth tip of the workpiece. Hence, the tooth tip of the workpiece is placed closer to one side in a thread groove of the threaded grinding wheel, which leads to the complexity of the workpiece rotation control and a long duration of time spent for contact detection in contact conditions of the tooth surfaces of the workpiece (at a time of precise phasing). As a result, time needed to complete the phasing may be long.

In addition, in the gear grinding machine, the workpiece is ground with use of the threaded grinding wheel dressed with a dresser, and thus the same problem may occur not only in phasing the grinding wheel with the workpiece in a case of grinding but also phasing the grinding wheel with the dresser in a case of dressing.

Accordingly, the present invention has been made to solve the above-described problems, and an object of the present invention is to provide a method of phasing a threaded grinding wheel, as well as a gear grinding machine which enable phasing a threaded grinding wheel with a gear to be machined or with a dresser at high speed.

### MEANS FOR SOLVING THE PROBLEMS

A method of phasing a threaded grinding wheel according to the first invention that solves the problems is a method of phasing a threaded grinding wheel, with a gear to be machined which is to be ground by use of the threaded grinding wheel, or with a dresser which is to dress the threaded grinding wheel, the method characterized by comprising:
measuring a projection-indentation amount of a side surface of the threaded grinding wheel which is being rotated, by radiating a laser beam from a laser displacement sensor on the side surface;
finding a position of a thread groove of the threaded grinding wheel on the basis of the projection-indentation amount;
adjusting a phase of the threaded grinding wheel so that a tooth tip of the gear to be machined or a blade edge of the dresser faces the position of the thread groove;
bringing one of thread surfaces of the threaded grinding wheel into contact with a corresponding one of tooth surfaces of the gear to be machined or with a corresponding one of blade surfaces of the dresser, and then bringing the other one of the thread surfaces of the threaded grinding wheel into contact with the other one of the tooth surfaces of the gear to be machined or with the other one of the blade surfaces of the dresser, by rotating the threaded grinding wheel in both directions; and
adjusting the phase of the threaded grinding wheel so that the tooth tip of the gear to be machined or the blade edge of the dresser is placed at an intermediate phase between the phases of the threaded grinding wheel in contact conditions.

A method of phasing a threaded grinding wheel according to the second invention that solves the problems is a method of phasing a threaded grinding wheel, with a gear to be machined which is to be ground by use of the threaded grinding wheel, or with a dresser which is to dress the threaded grinding wheel, the method characterized by comprising:
measuring a projection-indentation amount of a side surface of the threaded grinding wheel which is being rotated, by radiating a laser beam from a laser displacement sensor on the side surface;
finding a position of a thread groove of the threaded grinding wheel on the basis of the projection-indentation amount;
adjusting a phase of the threaded grinding wheel so that a tooth tip of the gear to be machined or a blade edge of the dresser faces the position of the thread groove;
storing as a first phase a phase of the threaded grinding wheel when one of thread surfaces of the threaded grinding wheel comes into contact with a corresponding one of tooth surfaces of the gear to be machined or with a corresponding one of blade surfaces of the dresser by rotating the threaded grinding wheel in one direction;
storing as a second phase a phase of the threaded grinding wheel when the other one of the thread surfaces of the threaded grinding wheel comes into contact with the other one of the tooth surfaces of the gear to be machined or with the other one of the blade surfaces of the dresser by rotating the threaded grinding wheel in the other direction;
finding an intermediate phase of the threaded grinding wheel between the first phase and the second phase; and
adjusting the phase of the threaded grinding wheel so that a tooth tip of the gear to be machined or a blade edge of the dresser is placed at the intermediate phase.

A gear grinding machine according to the third invention that solves the problems is a gear grinding machine for grinding a gear to be machined by rotating a threaded grinding wheel and the gear to be machined in a state of being meshed with each other, the gear grinding machine characterized by comprising:
a dresser for dressing the threaded grinding wheel;
a laser displacement sensor for measuring a projection-indentation amount of a side surface of the threaded grinding wheel which is being rotated, by radiating a laser beam on the side surface;
a thread groove position detection unit for detecting a position of the thread groove of the threaded grinding wheel on the basis of the projection-indentation amount measured by the laser displacement sensor;
a rough phasing means for phasing the threaded grinding wheel so that a tooth tip of the gear to be machined or a blade edge of the dresser faces the position of the thread groove detected by the thread groove position detection unit;
a phase storing unit for storing phases of the threaded grinding wheel when each thread surface of the threaded grinding wheel comes into contact with two opposite tooth surfaces of the material to be machined or with two opposite blade surfaces of the dresser by rotating in two directions the threaded grinding wheel phased by the rough phasing means;
an intermediate phase calculating unit for calculating an intermediate phase between the phases of the threaded grinding wheel which are stored in the phase storing unit; and
a precise phasing means for phasing the threaded grinding wheel so that the tooth tip of the gear to be machined or the blade edge of the dresser faces the position of the thread groove detected by the thread groove position detection unit.

### EFFECTS OF THE INVENTION

According to the method of phasing a threaded grinding wheel, as well as the gear grinding machine in the present invention, the phase of the threaded grinding wheel is adjusted so that the tooth tip of the gear to be machined or the blade edge of the dresser 32 faces the position of the thread groove of the threaded grinding wheel 14, the position being found on the basis of the projection-indentation amount. Subsequently, in this state, the intermediate phase is found by causing the thread surface of the threaded grinding wheel to contact the tooth surface of the gear to be machined or the blade surface of the dresser. Furthermore, the phase of the threaded grinding wheel is adjusted so that the tooth tip of the gear to be machined or the blade edge of the dresser is placed at this intermediate phase. As a result, time needed for the phase adjustment as a whole is reduced, and thus the phasing of the threaded grinding wheel with the gear to be machined or with the dresser can be performed at high speed.

### BRIEF DESCRIPTION OF THE DRAWINGS

[Fig. 1] Fig. 1 is a schematic diagram showing the configuration of a gear grinding machine to which a method for phasing a threaded grinding wheel according to one example of the present invention is applied, and shows a disc dresser which is dressing a threaded grinding wheel.
[Fig. 2] Fig. 2 is a view showing the threaded grinding wheel grinding the workpiece.
[Fig. 3] Fig. 3 is a view showing a laser displacement sensor radiating a laser beam on the threaded grinding wheel.
[Fig. 4] Fig. 4 is a view showing changes in distances to the threaded grinding wheel, which are measured by the laser displacement sensor.
[Fig. 5] Fig. 5 is a view showing the threaded grinding wheel which is phased with the workpiece.

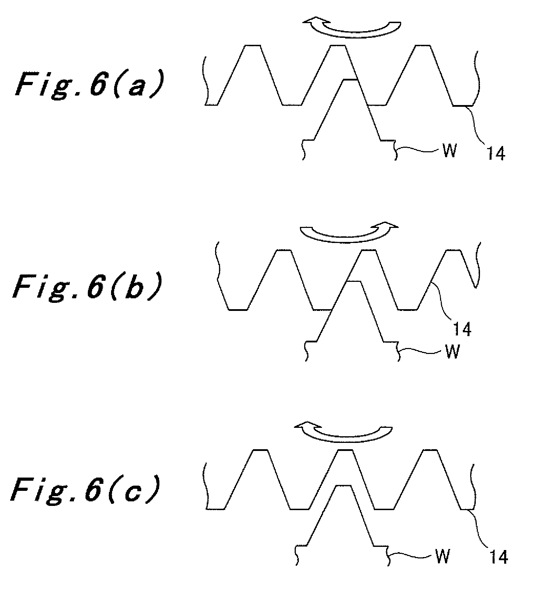

[Fig. 6] Part (a), (b), and (c) of Fig. 6 are views showing the threaded grinding wheel which is precisely phased with the workpiece. Part (a) of Fig. 6 is a view showing one of thread surfaces of the threaded grinding wheel which is brought into contact with a corresponding one of tooth surfaces of the workpiece, part (b) of Fig. 6 is a view showing the other one of the thread surface of the threaded grinding wheel which is brought into contact with the other one of the tooth surfaces of the workpiece, and part (c) of Fig. 6 is a view showing a tooth tip of the workpiece which is placed at an intermediate phase between two phases where two thread surfaces of the threaded grinding wheel are in contact conditions.
[Fig. 7] Fig. 7 is a view showing the threaded grinding wheel which is roughly phased with the disc dresser.

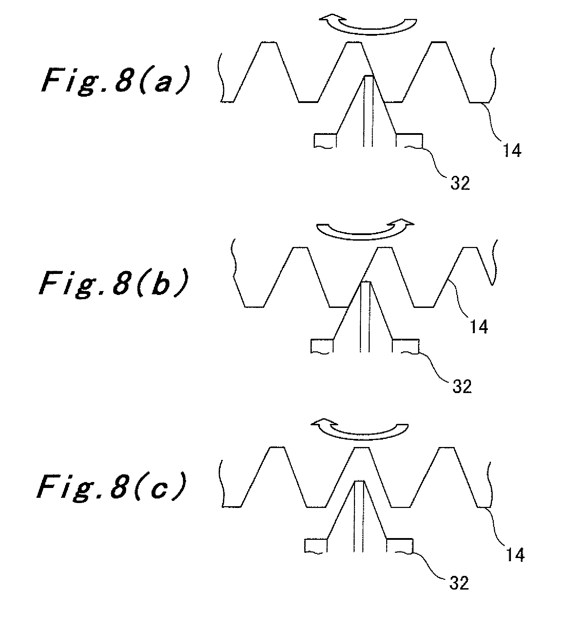

[Fig. 8] Part (a), (b), and (c) of Fig. 8 are views showing the threaded grinding wheel which is precisely phased with the disc dresser. Part (a) of Fig. 8 is a view showing one of the thread surfaces of the threaded grinding wheel is brought into contact with a corresponding one of the blade surfaces of the disc dresser, part (b) of Fig. 8 is a view showing the other one of the thread surfaces of the threaded grinding wheel which is brought into contact with the other one of the blade surfaces of the disc dresser, and part (c) of Fig. 8 is a view showing a blade edge of the disc dresser which is placed at an intermediate phase between two phases where two thread surfaces of the threaded grinding wheel are in contact conditions.

### MODE FOR CARRYING OUT THE INVENTION

Hereinafter, a method of phasing a threaded grinding wheel according to the present invention will be described in detail with reference to the drawings.

### EMBODIMENT

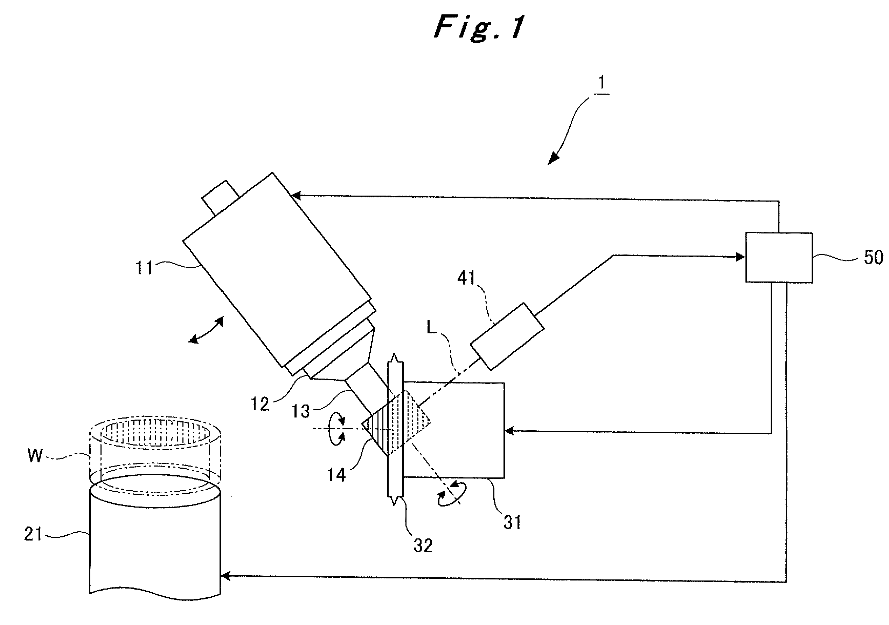

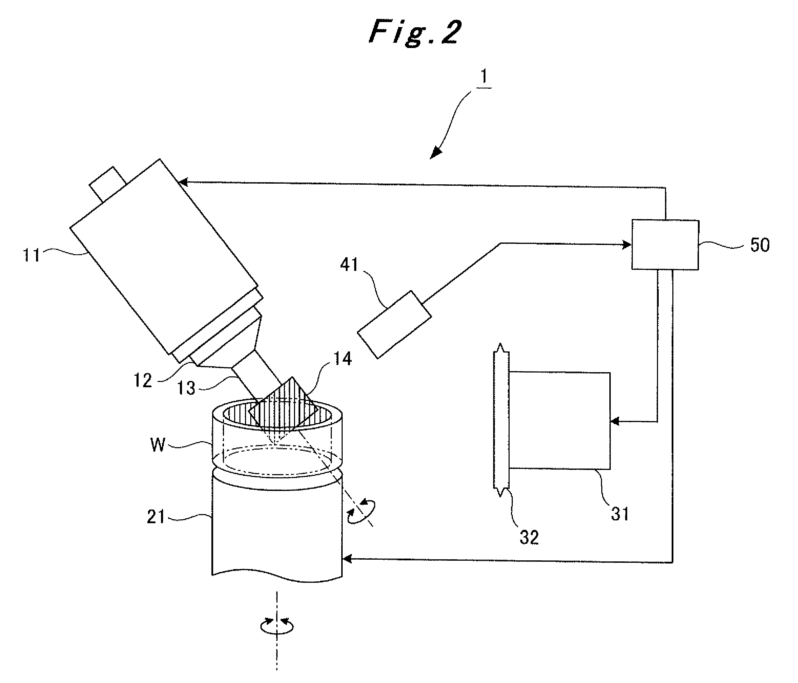

A gear grinding machine 1 to which the method of phasing a threaded grinding wheel according to the present invention is applied is used to grind a workpiece (gear to be machined) W as a material of an internal gear with a barrel-shaped threaded grinding wheel 14 as shown in Fig. 2. Further, the gear grinding machine 1 has the dressing function of dressing the threaded grinding wheel 14 with a disc dresser 32 as shown in Fig. 1.

As shown in Figs. 1 and 2, a grinding wheel head 11 is movably and turnably supported in the gear grinding machine 1. A spindle 12 is rotatably supported by this grinding wheel head 11. At the tip of this spindle 12, a grinding wheel arbor 13 is formed. Further, to the tip of the grinding wheel arbor 13, the threaded grinding wheel 14 is removably attached. Thus, driving the grinding wheel head 11 causes the threaded grinding wheel 14 to be rotationally driven through the grinding wheel arbor 13 of the spindle 12.

In front of the grinding wheel head 11, a rotary table 21 is rotatably supported. To an upper surface of this rotary table 21, the workpiece W is removably attached through an unillustrated installation jig. Thus, driving the rotary table 21 causes the workpiece W to be rotationally driven.

At a side of the rotary table 21, a dresser drive unit 31 is movably supported. To this dresser drive unit 31, the disc dresser 32 is removably attached. Thus, driving the dresser drive unit 31 causes the disc dresser 32 to be rotationally driven.

A laser displacement sensor 41 is provided at a side of the threaded grinding wheel 14. The laser displacement sensor 41 employs a method to which triangulation is applied. The laser displacement sensor 41 measures a displacement amount to a measurement object by radiating a concentrated semiconductor laser beam on the measurement object through a transmitter lens, spotting the laser beam reflected by the measurement object on a light position detection element, and detecting the position of the spot.

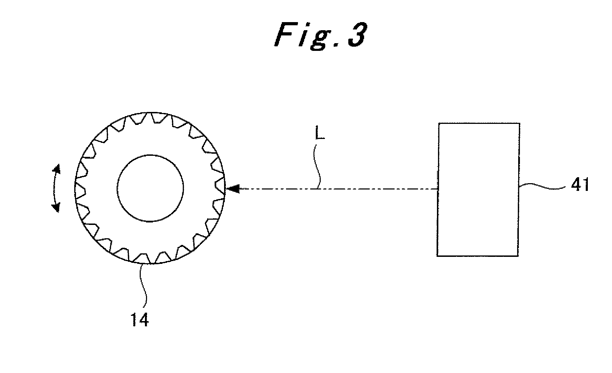

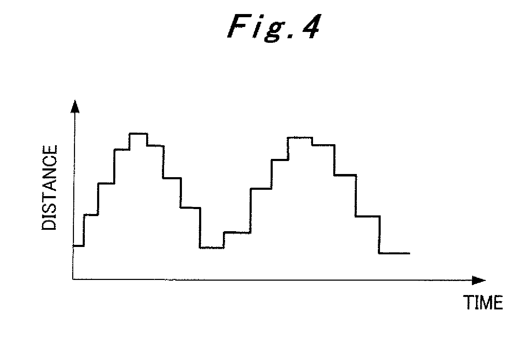

Specifically, as shown in Fig. 3, the laser displacement sensor 41 radiates a concentrated laser beam L on the center position in the thread width direction of the side surface of the rotating threaded grinding wheel 14, and thereby measures distances to peaks and valleys (the thread tips and the thread grooves), namely a projection-indentation amount. As shown in Fig. 4, the distance measured by the laser displacement sensor 41 is displayed constantly during measurement with the threaded grinding wheel rotating. A recessed portion of a displayed wave form in Fig. 4 is the distance to the thread tip of the threaded grinding wheel 14 and a projected portion of the wave form is the distance to the thread groove.

Moreover, in the gear grinding machine 1, an NC unit (thread groove position detection unit, phase storing unit, intermediate phase calculating unit) 50 is provided. This NC unit 50 is connected to, for example, the grinding wheel head 11, the rotary table 21, the dresser drive unit 31, the laser displacement sensor 41, and the like. The NC unit 50 controls the grinding of the workpiece W with the threaded grinding wheel 14 and the dressing of the threaded grinding wheel 14 with the disc dresser 32 based on inputted workpiece specifications and machining conditions. Ahead of meshing (gear meshing operation) at the time of the above-described grinding or dressing, the NC unit 50 (rough phasing means, precise phasing means) phases the threaded grinding wheel 14 with the workpiece W.

Accordingly, in a case of grinding the workpiece W with the threaded grinding wheel 14, the threaded grinding wheel 14 is moved into the workpiece W attached to the rotary table 21 first as shown in Fig. 2, and then is rotated.

Next, the laser beam L is radiated from the laser displacement sensor 41 toward the rotating threaded grinding wheel 14. As a result, the distances to peaks and valleys of the threaded grinding wheel 14 are consecutively measured, and the measured distances to the peaks and valleys are displayed as time passes, as shown in Fig. 4. Here, the recessed portion of the displayed wave form is determined as the distance to the thread tip of the threaded grinding wheel 14 and the projected portion of the wave form is determined as the distance to the thread groove of the threaded grinding wheel 14.

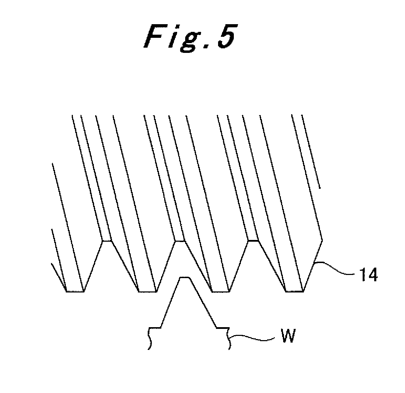

Then, on the basis of the measurement result, the center position in the thread groove of the threaded grinding wheel 14 is calculated, and the phase of the threaded grinding wheel 14 is adjusted (rough phasing) so that the tooth tip of the workpiece W faces the center position in the thread groove, as shown in Fig. 5. Moreover, the position of the threaded grinding wheel 14 is adjusted so that the tooth tip of the workpiece W is positioned slightly closer to the thread groove (closer to the center of the threaded grinding wheel 14) than the thread tip of the threaded grinding wheel 14 is.

Subsequently, in such a roughly phase-matched state, the threaded grinding wheel 14 is rotated forward, and one of the thread surfaces of the threaded grinding wheel is brought into contact with one of the tooth surfaces of the workpiece, as shown in part (a) of Fig. 6. When the threaded grinding wheel 14 comes into contact with the workpiece W as described above, the phase (first phase) of the threaded grinding wheel 14 at this time is detected by a contact sensor (not shown), and stored in the NC unit 50.

Further, as shown in part (b) of Fig. 6, the threaded grinding wheel 14 is rotated reversely, and the other one of the thread surfaces of the threaded grinding wheel 14 is brought into contact with the other one of the tooth surfaces of the workpiece W. When the threaded grinding wheel 14 comes into contact with the workpiece W as described above, the phase (second phase) of the threaded grinding wheel 14 at this time is detected by the contact sensor, and stored in the NC unit 50.

Then, the NC unit 50 finds an intermediate phase from the two phases of the threaded grinding wheel 14 stored in contact conditions at the time of the forward rotation and the reverse rotation. The intermediate phase is intermediate between the two stored phases. After that, the phase of the threaded grinding wheel 14 is adjusted (precise phasing) so that the tooth tip of the workpiece W is placed at the intermediate phase found, as shown in part (c) of Fig. 6. Subsequently, in such a precisely phase-matched state, the threaded grinding wheel 14 is meshed with the workpiece W, and the threaded grinding wheel 14 and the workpiece W are rotated in synchronization. As a result, the tooth surfaces of the workpiece W are ground by the thread surfaces of the threaded grinding wheel 14.

What should be noted here is that the use of the threaded grinding wheel 14 to grind a certain number of workpieces W causes a decrease in sharpness of the threaded grinding wheel 14 due to the wear of the thread surfaces thereof. To address this decrease, the dressing of the threaded grinding wheel 14 needs to be carried out on a regular basis with the disc dresser 32.

In a case of dressing the threaded grinding wheel 14 with the disc dresser 32, the threaded grinding wheel 14 is moved to the disc dresser 32 side as shown in Fig. 1, and then is rotated.

Subsequently, the laser beam L is radiated from the laser displacement sensor 41 toward the rotating threaded grinding wheel 14. As a result, the distances to peaks and valleys of the threaded grinding wheel 14 are consecutively measured, and the measured distances to the peaks and valleys are displayed as time passes, as shown in Fig. 4. Here, the recessed portion of the displayed wave form is determined as the distance to the thread tip of the threaded grinding wheel 14 and the projected portion of the wave form is determined as the distance to the thread groove.

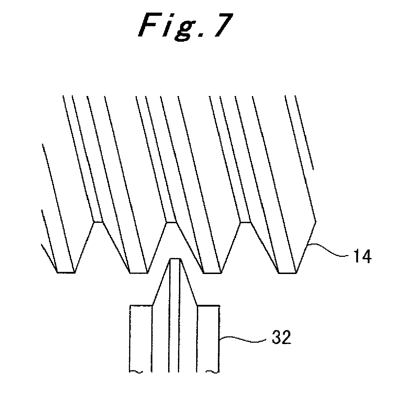

Then, on the basis of the measurement result, the center position in the thread groove of the threaded grinding wheel 14 is calculated, and the phase of the threaded grinding wheel 14 is adjusted (rough phasing) so that a blade edge of the disc dresser 32 faces the center position in the thread groove, as shown in Fig. 7. Moreover, the position of the threaded grinding wheel 14 is adjusted so that the blade edge of the disc dresser 32 is positioned slightly closer to the thread groove (closer to the center of the threaded grinding wheel 14) than the thread tip of the threaded grinding wheel 14 is.

Subsequently, in such a roughly phase-matched state, the threaded grinding wheel 14 is rotated forward, and one of the thread surfaces of the threaded grinding wheel is brought into contact with a corresponding one of the blade surfaces of the disc dresser 32, as shown in part (a) of Fig. 8. When the threaded grinding wheel 14 comes into contact with the disc dresser 32 as described above, the phase (first phase) of the threaded grinding wheel 14 at this time is detected by a contact sensor (not shown), and stored in the NC unit 50.

As shown in part (b) of Fig. 8, the threaded grinding wheel 14 is rotated reversely, and the other one of the thread surfaces of the threaded grinding wheel is brought into contact with the other one of the blade surfaces of the disc dresser 32, as shown in part (a) of Fig. 8. When the threaded grinding wheel 14 comes into contact with the disc dresser 32 as described above, the phase (second phase) of the threaded grinding wheel 14 at this time is detected by the contact sensor (not shown), and stored in the NC unit 50.

Then, the NC unit 50 finds an intermediate phase from the two phases of the threaded grinding wheel 14 stored in contact conditions at the time of the forward rotation and the reverse rotation. The intermediate phase is intermediate between the two stored phases. After that, as shown in part (c) of Fig. 8 the phase of the threaded grinding wheel 14 is adjusted (precise phasing) by positioning the threaded grinding wheel 14 so that the blade edge of the dresser 32 is placed at the intermediate phase found. Subsequently, in such a precisely phase-matched state, the threaded grinding wheel 14 is meshed with the disc dresser 32, and the disc dresser 32 is rotated. As a result, the thread surfaces of the threaded grinding wheel 14 are dressed by the blade surfaces of the disc dresser 32.

It should be noted that, although the method of phasing a threaded grinding wheel according to the present invention is applied to the internal gear grinding machine for grinding the workpiece as an internal gear material in this embodiment, the method may be applied to the external gear grinding machine for grinding the workpiece as an external gear material.

Thus, according to the method of phasing a threaded grinding wheel, as well as the gear grinding machine in the present invention, the threaded grinding wheel 14 is phased with the workpiece W or with the disc dresser 32 prior to the engagement of the threaded grinding wheel 14 with the workpiece W or with the disc dresser 32 during grinding or dressing. In performing this phasing, the phase of the threaded grinding wheel 14 is adjusted so that the tooth tip of the workpiece W or the blade edge of the disc dresser 32 faces the center position in a thread groove of the threaded grinding wheel 14. Subsequently, in this roughly phase-matched state, the intermediate phase is found by causing the thread surface of the threaded grinding wheel 14 to contact the tooth surface of the workpiece W or the blade surface of the disc dresser 32. Furthermore, the phase of the threaded grinding wheel 14 is precisely adjusted so that the tooth tip of the workpiece W or the blade edge of the disc dresser 32 is placed at this intermediate phase. As a result, time needed for the phase adjustment as a whole is reduced, and thus the phasing of the threaded grinding wheel 14 with the workpiece W or with the disc dresser 32 can be performed at high speed.

### INDUSTRIAL APPLICABILITY

The present invention can be applied to a gear grinding machine which enables a reduction of non-machining time.

## Claims

1. A method of phasing a threaded grinding wheel, with a gear to be machined which is to be ground by use of the threaded grinding wheel, or with a dresser which is to dress the threaded grinding wheel, the method **characterized by** comprising:
measuring a projection-indentation amount of a side surface of the threaded grinding wheel which is being rotated, by radiating a laser beam from a laser displacement sensor on the side surface;
finding a position of a thread groove of the threaded grinding wheel on the basis of the projection-indentation amount;
adjusting a phase of the threaded grinding wheel so that a tooth tip of the gear to be machined or a blade edge of the dresser faces the position of the thread groove;
bringing one of thread surfaces of the threaded grinding wheel into contact with a corresponding one of tooth surfaces of the gear to be machined or with a corresponding one of blade surfaces of the dresser, and then bringing the other one of the thread surfaces of the threaded grinding wheel into contact with the other one of the tooth surfaces of the gear to be machined or with the other one of the blade surfaces of the dresser, by rotating the threaded grinding wheel in both directions; and
adjusting the phase of the threaded grinding wheel so that the tooth tip of the gear to be machined or the blade edge of the dresser is placed at an intermediate phase between the phases of the threaded grinding wheel in contact conditions.

2. A method of phasing a threaded grinding wheel, with a gear to be machined which is to be ground by use of the threaded grinding wheel, or with a dresser which is to dress the threaded grinding wheel, the method **characterized by** comprising:
measuring a projection-indentation amount of a side surface of the threaded grinding wheel which is being rotated, by radiating a laser beam from a laser displacement sensor on the side surface;
finding a position of a thread groove of the threaded grinding wheel on the basis of the projection-indentation amount;
adjusting a phase of the threaded grinding wheel so th at a tooth tip of the gear to be machined or a blade edge of the dresser faces the position of the thread groove;
storing as a first phase a phase of the threaded grinding wheel when one of thread surfaces of the threaded grinding wheel comes into contact with a corresponding one of tooth surfaces of the gear to be machined or with a corresponding one of blade surfaces of the dresser by rotating the threaded grinding wheel in one direction;
storing as a second phase a phase of the threaded grinding wheel when the other one of the thread surfaces of the threaded grinding wheel comes into contact with the other one of the tooth surfaces of the gear to be machined or with the other one of the blade surfaces of the dresser by rotating the threaded grinding wheel in the other direction;
finding an intermediate phase of the threaded grinding wheel between the first phase and the second phase; and
adjusting the phase of the threaded grinding wheel so that a tooth tip of the gear to be machined or a blade edge of the dresser is placed at the intermediate phase.

3. A gear grinding machine for grinding a gear to be machined by rotating a threaded grinding wheel and the gear to be machined in a state of being meshed with each other, the gear grinding machine **characterized by** comprising:
a dresser for dressing the threaded grinding wheel;
a laser displacement sensor for measuring a projection-indentation amount of a side surface of the threaded grinding wheel which is being rotated, by radiating a laser beam on the side surface;
a thread groove position detection unit for detecting a position of the thread groove of the threaded grinding wheel on the basis of the projection-indentation amount measured by the laser displacement sensor;
a rough phasing means for phasing the threaded grinding wheel so that a tooth tip of the gear to be machined or a blade edge of the dresser faces the position of the thread groove detected by the thread groove position detection unit;
a phase storing unit for storing phases of the threaded grinding wheel when each thread surface of the threaded grinding wheel comes into contact with two opposite tooth surfaces of the material to be machined or with two opposite blade surfaces of the dresser by rotating in two directions the threaded grinding wheel phased by the rough phasing means;
an intermediate phase calculating unit for calculating an intermediate phase between the phases of the threaded grinding wheel which are stored in the phase storing unit; and
a precise phasing means for phasing the threaded grinding wheel so that the tooth tip of the gear to be machined or the blade edge of the dresser faces the position of the thread groove detected by the thread groove position detection unit.
